# EUROPÄISCHE PATENTSCHRIFT

(11) **EP 0 999 433 B1**
(45) Veröffentlichungstag und Bekanntmachung des Hinweises auf die Patenterteilung: **25.08.2010**
(21) Anmeldenummer: 99250394.6
(22) Anmeldetag: 05.11.1999
(51) Int. Cl.: G01H 1/00

(54) **Vorrichtung und Verfahren zum Erfassen von Schwingungssignalen und/oder Körperschallsignalen**
Apparatus and method for acquisition of vibration signals and/or structural sound signals
Dispositif et procédé d'acquistion des signaux des vibrations et/ou de son structurel

(30) Priorität: 06.11.1998 DE 19851338; 18.12.1998 DE 19858666
(43) Veröffentlichungstag der Anmeldung: 10.05.2000
(60) Teilanmeldung: 08015262.2
(73) Patentinhaber: Prüftechnik Dieter Busch AG, 85737 Ismaning (DE)
(72) Erfinder: Busch, Dieter, 85737 Ismaning (DE); Franke, Dieter, 01326 Dresden (DE); Staub, Christoph, 80687 München (DE)

(56) Entgegenhaltungen:
- WO-A-95/08806
- WO-A-97/10491
- WO-A-98/28599
- US-A- 4 885 707

## Beschreibung

Die Erfindung betrifft eine Vorrichtung und ein Verfahren zum Erfassen von Schwingungssignalen und/oder Körperschallsignalen mittels eines tragbaren elektronischen Datensammlers mit den im Oberbegriff des Anspruchs 1 beziehungsweise Anspruchs 30 genannten Merkmalen.

Derartige, auch als Datensammler bezeichnete Vorrichtungen, welche auch zum Erfassen von akustischen Zustandsdaten geeignet sind, werden in der WO 95/08806 beschrieben. Vorrichtungen dieser Art sind geeignet, Geräuschdaten und Schwingungsdaten an Maschinen zu messen, zu sammeln und gegebenenfalls zu bewerten. Eine spezielle Anwendung besteht darin, Geräusche von Maschinenlagern zu messen und zu analysieren.

Wie bekannt, besteht ein wichtiges Problem darin, dass bei solchen Messungen genauestens festgehalten wird, an welcher Mess-Stelle an einem Messobjekt eine Messung erfolgt. Verwechslungen in dieser Beziehung sind von erheblichem Nachteil, da sie unter Umständen Korrekturmaßnahmen nach sich ziehen, welche im günstigsten Fall überflüssig sind und im schlimmsten Fall Folgeschäden an einer inspizierten Maschine nach sich ziehen, zum Beispiel bei der fehlerhaften Korrektur einer Unwucht.

In diesem Zusammenhange hat es sich bewährt, Mess-Stellen vorzusehen, welche eine geeignete Kodierung aufweisen, so dass die Wahrscheinlichkeit reduziert wird, eine fehlerhafte Zuordnung zwischen Messergebnis und zugehöriger Mess-Steile zu dokumentieren. Eine entsprechende Vorrichtung wird in der DE 43 20 657 beschrieben.

In der WO 97/10491 und der WO 98/28599 werden gattungsgemäße Datensammeleinrichtungen beschrieben. Beide Schriften behandeln den Einsatz einer tragbaren Datensammeleinrichtung für Messungen von Maschinenschwingungen in einer komplexen industriellen Umgebung. Nachteilig ist bei beiden beschriebenen Datensammeleinrichtungen, dass die Identifikation der jeweiligen Mess-Stelle besonders dann schwierig ist, wenn erfahrenes oder spezialisiertes Personal nicht zur Verfügung steht.

Im Zuge einer weitergehenden Automatisierung von Fabrikanlagen oder anderen großflächig angelegten technischen Einrichtungen ergeben sich jedoch immer mehr automatisch oder semi-automatisch abzufragende Mess-Stellen, sei es für Temperaturen, für akustische Emissionen, für Drücke, Füllstände, Gewichte und so weiter. Bei der semi-automatischen Abfrage solcher Betriebsdaten mittels eines tragbaren Daten-Erfassungs- und -Sammel-Gerätes muss eine Bedienperson daher im Vorwege relativ genau instruiert werden, welche Gegebenheiten in einer Fabrikhalle oder an einer Maschine, einem Maschinenpark und so weiter vorliegen und in welcher Art, Weise und in welchem Turnus erforderlichenfalls Messungen der genannten Arten vorzunehmen sind. Die Erledigung solcher Aufgaben in größeren Werkskomplexen ist daher an eine kleine Anzahl von Spezialisten gebunden. Es ist nachteilig, dass solche Aufgaben normalerweise nur dann delegiert werden können, wenn im Vorwege Instruktionen stattgefunden haben. Weder Fachpersonal, noch geringer qualifiziertes Bedienpersonal kann bei Krankheit oder sonstig bedingtem Personalmangel in diesem Zusammenhang risikolos eingesetzt werden.

Es ist daher Aufgabe der Erfindung, das vorgenannte Problem zu lösen und eine Vorrichtung und ein Verfahren zum Erfassen von Schwingungs- und Geräuschzustandsdaten und Prozessdaten als zugeordnete Hilfsgrößen zu schaffen, welche auch durch weniger qualifiziertes Personal benutzt und bedient werden kann, dabei für umfangreichere Maschinenareale genutzt werden kann und eine noch besser abgesicherte Erfassung von Geräusch- und Schwingungsdaten an Maschinen oder Maschinenteilen, gegebenenfalls auch an strukturellen Teilen (Trägern, Maschinenböden, Gehäusen und so weiter), ermöglicht.

Diese Aufgabe wird erfindungsgemäß durch eine Vorrichtung mit den im Anspruch 1 genannten Merkmalen gelöst. Dadurch, dass die Datensammeleinrichtung wenigstens ein Speichermittel umfasst, in dem das wenigstens eine Messobjekt mit seinen Mess-Stellen derart abgelegt ist, dass dieses auf einer Anzeigeeinrichtung des Datensammelgerätes bildlich/grafisch darstellbar ist, wobei die Darstellung die Anordnung des wenigstens einen Messobjektes mit seinen Mess-Stellen umfasst, anhand dieser Darstellung von einer Bedienperson eine beliebige der dargestellten Mess-Stellen auswählbar ist und für die ausgewählte Mess-Stelle die wenigstens eine Messaufgabe abrufbar ist, ist vorteilhaft möglich, dass eine Bedienperson mit der Vorrichtung, beispielsweise innerhalb einer Werkhalle oder dergleichen, zu verschiedenen Maschinen oder dergleichen laufen kann. Die Maschinen besitzen bekanntermaßen sogenannte Mess-Stellen, an die die Datensammeleinrichtung anschließbar ist. Mittels an der Datensammeleinrichtung angeordneter Bedieneinrichtungen ist nunmehr die Durchführung wenigstens einer bestimmten Messaufgabe an einer angeschlossenen Mess-Stelle möglich. Die Datensammeleinrichtung besitzt Mikrorechner- und Speichereinheiten, mittels denen die wenigstens eine Messaufgabe abgearbeitet werden kann und Messergebnisse gespeichert werden können. Mittels der Datensammeleinrichtung sind unterschiedliche Messaufgaben an mehreren Mess-Stellen von auch unterschiedlichen Maschinen und dergleichen durchführbar. Nach Abarbeiten einer sogenannten Route, die das Durchführen der Messung an mehreren Mess-Stellen an mehreren Maschinen beinhalten kann, können die gesammelten Messdaten einem übergeordneten System zur weiteren Auswertung, statistischen Erfassung oder dergleichen überspielt werden.

Die Datensammeleinrichtung ist mit einem Bildschirm, Display oder dergleichen ausgestattet, auf dem eine Darstellung, insbesondere eine bildliche und/oder grafische Darstellung, der zu untersuchenden Maschinen möglich ist. Die Darstellung erfolgt hierbei entweder schematisch oder in fotografischer Wiedergabe. Gleichzeitig sind auf dem Bildschirm die Mess-Stellen erkennbar. Soll nun eine bestimmte Messaufgabe an einer der Mess-Stellen durchgeführt werden, kann dieses auf dem Bildschirm in besonderer Weise, beispielsweise durch farbliche Markierung, Hinweispfeile oder dergleichen, kenntlich gemacht werden. Somit wird auch für eine ungeübte (ungelernte) Bedienperson möglich, die Datensammeleinrichtung definiert an eine ausgewählte Hess-Stelle anzuschließen. Hierzu ist nur noch die Darstellung auf dem Bildschirm mit der Wirklichkeit zu vergleichen. Insbesondere ist vorgesehen, dass alle möglichen Mess-Stellen kenntlich gemacht sind und die Bedienperson sich eine Reihenfolge der Abarbeitung selber auswählt.

Insbesondere kann vorgesehen sein, dass in der Datensammeleinrichtung ein Lageplan oder dergleichen einer größeren zusammenhängenden Maschinenansammlung (Fabrikanlage oder dergleichen) abgespeichert ist. Diese beinhaltet eine Vielzahl von zu überwachenden Maschinen. Die jeweiligen Maschinen können durch zoomartiges Vergrößern oder ausschnittsweise Darstellung aus der gesamten Anordnung einzeln dargestellt werden, so dass die wirklichkeitsnahe Darstellung mit den vorhandenen Mess-Stellen auf dem Bildschirm erfolgen kann. Die einzelnen Bilder sind in Bildpunkten interaktiv untereinander verknüpft (zum Beispiel Maschine in Fabrikhalle anklicken → Bild springt auf Darstellung Maschine)

Schließlich ist vorgesehen, dass bei angeschlossenen Datensammeleinrichtungen an der ausgewählten, gegebenenfalls vom Bildschirm vorgegebenen Mess-Stelle die bildliche Darstellung von einem Menü zur Durchführung der Messaufgabe überlagert ist. Gleichzeitig kann eine Darstellung der ermittelten Messwerte, bezogen auf die vorgegebene Mess-Stelle, erfolgen. Gegebenenfalls erfolgt gleichzeitig eine Bewertung der Messwerte.

Kern der Erfindung ist also die bildliche/grafische Darstellung von Maschinen, Aggregaten oder dergleichen auf einer Anzeigeeinrichtung einer tragbaren Datensammeleinrichtung, wobei Mess-Stelle, Messaufgabe, Messwerte und/oder Messbewertung zusammengehörig auf dem Bildschirm darstellbar sind. Gleichzeitig erfolgt für Dokumentation und weitere Auswertung eine entsprechende Speicherung.

In bevorzugter Ausgestaltung der Erfindung ist vorgesehen, dass nach Abarbeitung der wenigstens einen Messaufgabe wenigstens eine weitere Messaufgabe der ausgewählten Mess-Stelle abarbeitbar ist. Hierdurch lässt sich sofort die, das heißt die neuerliche Mess-Stellen-Erkennung, die nächste Messaufgabe automatisch abarbeiten.

In weiterer bevorzugter Ausgestaltung der Erfindung ist vorgesehen, dass nach Abarbeitung der wenigstens einen Messaufgabe der ausgewählten Mess-Stelle die Datensammeleinrichtung automatisch die der ausgewählten Mess-Stelle in der bildlichen/grafischen, räumlich nächstliegenden Mess-Stelle aufruft. Hierdurch wird eine besonders einfache und zuverlässige Bedienführung möglich. Insbesondere kann beispielsweise am linken Rand der Darstellung mit der Abarbeitung der Mess-Stellen begonnen werden. Von dieser "linken" Mess-Stelle wird dann von der Bedienführung die nächste, rechts daneben liegende Mess-Stelle abgearbeitet.

Die Aufgabe wird auch durch ein Verfahren mit den im Anspruch 30 genannten Merkmalen gelöst, welches das Sammeln oder das Aus- und Bewerten von Schwingungssignalen und/oder Körperschallsignalen oder deren Hilfsgrößen, an Aggregaten, Maschinen oder deren Bauteilen betrifft, und wobei mittels eines Datensammelgerätes und angeschlossener Messwertaufnehmer die genannten Daten zur Auswertung, Speicherung oder Darstellung zunächst in einen Datensammler und bei Bedarf in einen übergeordneten Rechner messbar und eingebbar sind, darüber hinaus eine Führung eines Benutzers bei turnusmäßiger oder ad-hoc angesetzter Erfassung von Messdaten beim Messdatensammeln anhand einer am Datengerät visuell, speziell hochauflösend visuell, dargestellten Beschreibung des Standortes eines zu inspizierenden Aggregates innerhalb eines Ortes (oder einer großflächigen Umgebung) und der Anordnung der dort lokalisierten Mess-Stellen erfolgt, wobei gleichzeitig die dort durchzuführenden Messaufgaben in symbolischer, oder insbesondere hochgenauer, Darstellung erfolgt, und dabei zumindest anteilig durch folgende Verfahrensschritte oder weitere Merkmale gekennzeichnet ist:

Die Führung eines Benutzers oder einer Bedienperson beim Datensammeln erfolgt anhand der bildlichen/ grafischen Darstellung eines Gebiets-Werks-, Hallen- oder Anlagenplanes mit den Hess-Stellen einer räumlichen stufenweise verknüpften Anordnung der dort befindlichen Gegenstände oder Elemente, in der die zu messenden Aggregate mit eben diesen Hess-Stellen sich befinden.

Die Gegenstände oder Elemente werden an einem Anzeigeteil des Datensammlers in jeweiligen, einzeln zueinander (gegebenenfalls auch mehrfach) in Beziehung gesetzten Bildern von Lageplänen und Aggregatsabbildungen dargestellt.

Daran verknüpft ist eine bildliche/grafische Darstellung eines zu inspizierenden oder zu lokalisierenden Aggregates mit der Anordnung daran befindlicher Mess-Stellen. Zugleich wird dargestellt, welche Reihenfolge der Abarbeitung einer vorgegebenen Messaufgabe vorgesehen oder vordefiniert ist. Ein Benutzer kann die Hierarchie der Arbeitsschritte der einzelnen Mess-Stellen und der zugeordneten Messaufgaben nach eigenem Ermessen festlegen. Es ist mit der genannten neuartigen Darstellung zusätzlich möglich, mit dem gleichen Bildschirm und in bevorzugt überlagerter Darstellung die optische Auswertung eines Messergebnisses zu visualisieren, wobei Maßnahmen getroffen werden können, dass eine direkte, unmissverständliche und gleichzeitige Visualisierung eines gerade inspizierten Messobjektes zu Kontrollzwecken erfolgt. Wenn die Ergebnisse der Messung und deren Aus- oder Bewertung direkt an der Grafik (dem Bild) des Aggregates dargestellt werden, (oder in überlagerter Form), so können Fehlerstellen direkt erkannt werden und bei Erkennen von kritischen Zuständen vor Ort auch direkte (Sofort-)Maßnahmen eingeleitet werden.

Die Benutzerführung stützt sich gemäß der Erfindung vorrangig auf bildliche/grafische Darstellungen und stellt somit eine sogenannte grafische Benutzeroberfläche dar (engl.: graphic user interface). Diese bildlichen/grafischen Darstellungen können nicht nur in passiver Darstellungsform erscheinen, sondern insbesondere von interaktivem Charakter sein. Damit kann ein Benutzer unter Verwendung von Eingabegeräten, wie zum Beispiel Keypad Touchpad, Light-Pen, Joystick und so weiter, ein jeweils interessierende bildliche/grafische Darstellung der Mess-Stelle aktivieren oder sonst wie als softwaremäßiges Objekt betätigen, unbeachtet lassen oder abwählen, das heißt inaktivieren oder schließen.

In einer weitergehenden Ausgestaltung der Erfindung wird vorgesehen, dass grafische Editoren herangezogen werden, um in der Datensammeleinrichtung selbst oder einem übergeordneten Rechner, wie zum Beispiel einem Personal Computer (PC), spezielle interaktive Punkte oder Objekte der Mess-Stellen zu spezifizieren oder für eine Abspeicherung vorzumerken. Hierzu ist es dienlich, wenn wiederkehrende Bildelemente und Verknüpfungs-Symbole sowie Arbeitsanweisungs-Symbole in einer Bibliothek bereitgehalten werden, so dass eine schnelle Wiederverwendung erfolgen kann.

Die erfindungsgemäße Vorgehensweise wird erleichtert, wenn solche grafischen Elemente oder Objekte mit blinkender oder farbiger oder inverser Darstellungsmöglichkeit vorgesehen sind. Auf diese Weise gelingt es, die Suche, gegebenenfalls die Aktivierung, einer Mess-Stelle beim Abarbeiten einer Route durch Darstellung entsprechender Bilder oder Skizzen zu erleichtern, so dass keinerlei Unklarheiten hinsichtlich der Reihenfolge zu inspizierender Mess-Stellen und der dort auszuführenden Messaufgaben entstehen können.

Gemäß der Erfindung ist es von Nutzen, wenn Messorte, von denen bekannt ist, dass sie mit einer automatischen Mess-Steilen-Erkennungseinrichtung ausgestattet sind, als solche bildmäßig, insbesondere in perspektivisch korrekter Darstellung, mitsamt einer optimal vorgesehenen Reihenfolge der Messaufgaben, dargestellt werden. Eine Bedienperson hat die manuelle Wahl- und Eingriffsmöglichkeit der Reihenfolge der Mess-Stellen eines Objektes und der zugehörigen Messaufgaben, so dass Mess-Stellen mit automatischer Identifikations- oder Erkennungseinrichtung zwar dargestellt werden, aber anhand subjektiver Entscheidungen selektiert und in einen Messvorgang einbezogen werden können. Weiterhin ist bevorzugt, dass die Art und die wegmäßige Optimierung der Reihenfolge der Abarbeitung davon abhängig gemacht wird, welche Messergebnisse an welchem Ort und zu welcher Zeit, aktuell oder in der Vergangenheit, erzielt wurden, so dass ständig nur unbedingt erforderliche oder zumindest vorrangige Messaufgaben erledigt werden. Gleichzeitig können möglichst kurze Wege für das Messpersonal ausgerechnet und visualisiert werden. Eine solche Visualisierung von Wegen, Reihenfolgen oder Runden kann nach Art eines Dia-Vortrages gestaltet werden oder nach Art einer Video- beziehungsweise Film-Darstellung.

Ein wichtiger und vorteilhafter Teil-Aspekt der Erfindung besteht darin, dass eine symbolhafte oder vollständige Arbeits-Anleitung visuell über einen Bildschirm wiedergegeben werden kann in Bezug zu den Mess-Stellen. Damit ist es möglich, eine anliegende Messaufgabe näher zu erläutern. Dies ist vorteilhafter, als eine Aufgabe nur mittels vereinbarter Symbole anzugeben. Hierzu können beispielsweise solche Informationen visualisiert werden, ob und in welcher Form ein Wechsel eines Messaufnehmers durchzuführen ist, welche geometrischen Randbedingungen zu beachten sind, welche Handhabung eines Werkzeuges oder Hilfsmittels gestattet oder insbesondere gerade nicht gestattet ist, ob eine spezielle Kabelführung zu beachten ist und so weiter.

Gemäß der Erfindung besteht eine vorteilhafte Visualisierungsweise darin, unter Nutzung eines hochauflösenden Displays nunmehr ein Messergebnis und dessen Be- und Auswertung mit bekannten grafischen Mitteln direkt zu den Mess-Stellen in einem Aggregatebild zu kombinieren und eine sinngemäße Zuordnung darzustellen. Dabei können insbesondere Darstellungsweisen unter Benutzung sogenannter Bargrafen inklusive Grenzwertdarstellung, oder richtungsbezogen mit unterschiedlicher Pfeillänge oder -stärke, oder unterschiedlichen Kreisdurchmessern, bezogen auf eine jeweils visualisierte Mess-Stelle zur Anwendung gelangen. Durch diese Art grafischer Unterstützung ist eine sofortige Bewertung durch den Nutzer oder die Bedienperson eines entsprechenden Datensammlers möglich. Da es erfahrungsgemäß weder sinnvoll noch möglich ist, alle eventuell interessierenden Informationen gleichzeitig auf einem Display darzustellen, kann gemäß der Erfindung ein jeweils interessierender Teil der Bildschirmdarstellung in sogenannter Zoom-Darstellung vergrößert wiedergegeben werden. Dieser Vorgang wird dadurch erleichtert, dass der Bildschirm berührungsempfindlich ausgelegt ist und zum Beispiel ein einmaliges Antippen einer interessierenden Einzelheit eine vergrößerte Darstellung von dieser bewirkt.

In ähnlicher Vorgehensweise ist es unter Umständen genauso interessant, nicht nur detailliertere Informationen zu erhalten, sondern auch pauschalisierte und zusammengefasste Darstellungen. Durch geeignete Eingabevorgänge mittels eines sogenannten Touchpads oder ähnlichem, gegebenenfalls durch eine Tastatur, kann ein entsprechendes Programm aktiviert werden, welches zur Visualisierung interessierender Kennwerte, Idealwerte, Maximalwerte, statistischer Werte und vergleichbarer Kennziffern dient, die in visuell eindeutiger Weise mit einer gleichzeitig visualisierten Mess-Stelle oder Messobjekt verknüpft sind.

Unter Verwendung eines grafischen Menüs können, ausgehend von einer visualisierten Mess-Stelle, dann auch weitere Analysen gestartet werden, zum Beispiel die Errechnung von Frequenzspektren, Zeitsignaldarstellungen, Verteilungsformen und Histogrammen und ähnlicher zusammenfassender Darstellungen. Darauf können deren Ergebnisse visualisiert und gesichtet werden, bei Bedarf auch nur anteilig und durch den Datensammler auf wesentliche Aussagen konzentriert.

Wie in diesem Falle ist es unter Verwendung des erfindungsgemäßen Verfahrens stets nützlich, die besonders wichtigen Informationen optisch/visuell hervorzuheben, sei es durch eine farblich hervorgehobene oder sei es durch blinkende Darstellung von zum Beispiel visualisierten Maschinengruppen, Maschinen, Mess-Stellen, zu beachtenden Arbeitsanweisungen oder zu beachtenden Messergebnissen.

Es versteht sich, dass zur Anzeige und Visualisierung von Ergebnissen die unterschiedlichsten, an sich bekannten grafischen Darstellungsformen verwendet werden können, insbesondere nunmehr mit besonderem Vorteil auch dreidimensionale Darstellungen. Darüber hinaus können die an sich bekannten grafischen Darstellungsformen multimedial erweitert werden, zum Beispiel durch gleichzeitiges Aussenden von akustischen Signalen. Von besonderem Vorteil sind dabei solche akustischen Signale, welche sich direkt von einem zu untersuchenden akustischen Signal ableiten, dabei aber mit Vorteil frequenzgefiltert oder frequenztransformiert sind oder mit einem Testgeräusch in vordefinierter Weise gemischt sind. Zu diesem Zweck kann das Verfahren einer Bedienperson die Nutzung von Kopfhörern vorschlagen, so dass ein vorhandenes Hallengeräusch reduziert wird. In ähnlicher Form können Schwingungssignale von mechanischen Strukturen, insbesondere von Gehäusen oder Maschinenböden, in visueller oder multimedialer Weise, und nach verschiedenen Darsteilungsarten, sichtbar oder besser interpretierbar gemacht werden. Hierdurch erleichtert sich das Ausführen von Instandhaltungsarbeiten, wie das Auswuchten oder Ausrichten von Maschinen oder -teilen, ganz wesentlich, und kann unter Umständen von nicht vorinstruiertem Fachpersonal durchgeführt werden.

Durch die Verwendung multimedial gestalteter Arbeitsanweisungen können auch andere Standard-Tätigkeiten eines Nutzers eines Datensammlers vereinfacht werden. Solche Arbeitsanweisungen fallen insbesondere unter folgende Kategorien "Ortswechsel" (weist einen Nutzer an, sich in die Nähe einer vordefinierten Mess-Stelle zu begeben), "Infomationsbeschaffung" (informiert einen Nutzer beispielsweise über Randbedingungen einer folgenden Messaufgabe), "Messung" (betrifft die eigentliche Ausführung einer Messung inklusive zum Beispiel einer Plausibilitätsbetrachtung hinsichtlich Gültigkeit eines Messergebnisses), "allgemeine Tätigkeit" (wie zum Beispiel ein Ventil oder einen Schalter betätigen) oder sie betreffen nur die einfache Kategorie eines "Wartezustand".

Die im Vorstehenden beschriebenen Einzelheiten der Erfindung spiegeln sich wieder in Einzelheiten der erfindungsgemäß zugehörigen Gerätschaften oder Systeme, insbesondere in der zugehörigen Software. Hierzu ist Folgendes zu nennen:

In vorteilhafter Ausgestaltung der Erfindung kann eine erfindungsgemäße Datensammeleinrichtung erfasste Daten mittels einer drahtlosen oder drahtgebundenen Übertragungseinrichtung an einen übergeordneten Rechner senden oder Vorgabewerte von einem solchen empfangen. Weiterhin ist es von Vorteil, wenn die Datensammeleinrichtung mit Messwertaufnehmern ausgestattet ist, welche eine automatische Mess-Stellenerkennung ermöglichen. Von besonderem Nutzen ist es gemäß der Erfindung, wenn die Datensammeleinrichtung die Anordnung von Mess-Stellen nicht nur anhand einer Übersichtsdarstellung, zum Beispiel nach Art eines Luftbildes, visualisieren kann, sondern auch die genaue Position und das Aussehen eines einzelnen Mess-Stellen im Detail wiedergeben kann. Zu diesem Zwecke werden nicht nur monochrom wirkende Bildschirme, sondern speziell auch farbig arbeitende Bildschirme, vorgeschlagen, insbesondere solche auf Basis von Flüssigkristall-Technologie.

Bevorzugte, wenn auch als Beispiel zu betrachtende Details der Erfindung werden anhand der in der Zeichnung dargestellten Einzelheiten erläutert. Es zeigen:
- Figur 1: in symbolisierter perspektivischer Darstellung eine Messaufgabe an einem Maschinenaggregat im Zusammenspiel mit einem erfindungsgemäßen Datensammler mit hochauflösender Visualisierungseinrichtung;
- Figur 2: als Beispiel einen durch die Visualisierungseinrichtung wiedergegebenen detaillierten Übersichtsplan und einen Arbeits-Hinweis und
- Figur 3: ein weiteres konkretes Beispiel der Erfindung.

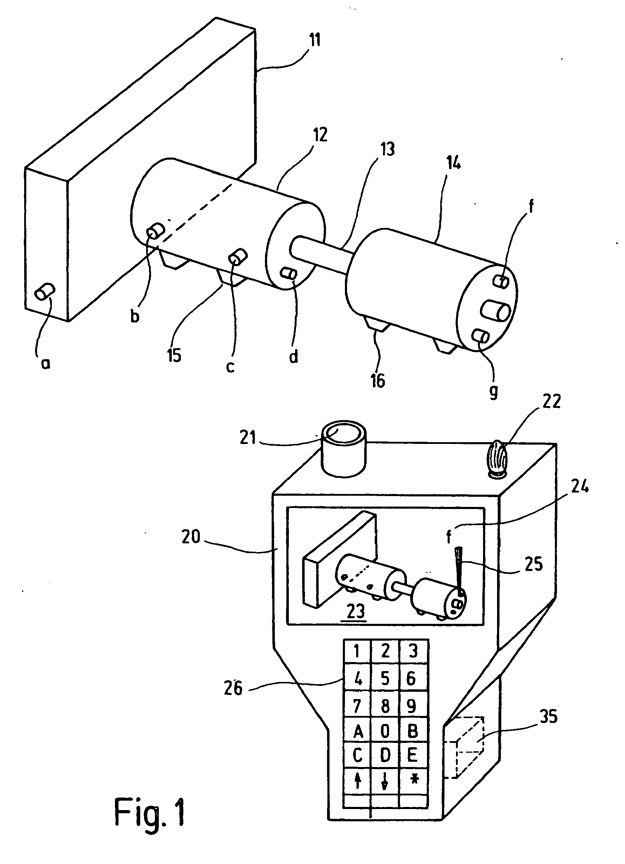

Bei dem in Figur 1 gezeigten Maschinenaggregat kann es sich zum Beispiel um die Kombination eines in einem Lüftergehäuse 11 befindlichen Lüfters (nicht gezeigt) mit einem Elektromotor 12 und einem mittels einer Welle 13 an diesen gekoppelten Kompressor 14 handeln. Das aus den genannten Komponenten bestehende Aggregat ist mit definierten Mess-Stellen a, b, c, d, f und g ausgestattet, welche zum Beispiel eine exakte Temperatur- oder insbesondere Schwingungs- und Geräuschmessung an einem entsprechenden Maschinenteil oder Ort gestatten. Wie dargestellt, sind Motor 12 und Kompressor 14 mittels Maschinenfüßen 15, 16 zum Beispiel ebenerdig aufgestellt, auch das Lüftergehäuse 11 kann auf dem Boden montiert sein.

An den dargestellten Mess-Stellen a bis f kann der entsprechende Messnippel 21 eines tragbaren, insbesondere batteriebetriebenen Datensammelgerätes 20 angesetzt werden. Wie an sich bekannt, können die Mess-Stellen für Geräusch- und Schwingungsmessung automatische Identifikation ausgerüstet sein und können dann neben einer Nutzinformation (zum Beispiel hinsichtlich Körperschall und Schwingung) dann auch eine Identifikations-Information abgeben, welche via Messnippel zur Auswertung durch das Datensammelgerät weitergeleitet wird. Erfindungsgemäßer Bestandteil des Datensammelgerätes 20 ist ein hochauflösender Bildschirm (Display) 23, mit dem jedwede Darstellung visualisiert werden kann, zweckmäßigerweise nicht nur monochrom, sondern mit besonderem Vorteil in farbiger Darstellung. Die Datensammeleinrichtung 20 umfasst wenigstens ein Speichermittel 35, in dem die möglichen Maschinen, Maschinenteile, Komperatoren, Aggregate oder dergleichen mit allen ihren Mess-Stellen abgelegt sind.

Wie in Figur 1 gezeigt, wird auf dem Display 23 gerade eine perspektivische Ansicht des bereits obig beschriebenen Aggregates wiedergegeben, wobei eine möglichst realistische und detailgetreue Wiedergabe angestrebt wird, welche der einer Fotografie oder eines Fernsehbildes ähnelt. Zusätzlich zu den visuell erkennbaren Dimensionen und den mechanischen Randbedingungen des Aggregates (Bezugsziffern 11 bis 14) wird auf dem Display 23 mittels eines pfeilartigen Symbols 25 auf eine als nächste auszumessende Mess-Stelle hingewiesen, welche anhand des durch Bezugsziffer 24 näher gekennzeichneten Symbols eindeutig identifiziert werden kann. Das pfeilartige Symbol kann dabei durch farbliche Gestaltung oder durch Blinken besonders augenfällig hervorgehoben werden. Gemäß einem besonderen Aspekt der Erfindung ist die Visualisierung einer Szenerie über ein Display 23 dabei nicht statisch, sondern dynamisch. Das heißt, gemäß der erfindungsgemäßen Vorgehensweise und den zugehörigen Geräten ist es möglich, dass die relative Position des tragbaren Datensammelgerätes 20 in Bezug zu einem Maschinen-Aggregat und der Mess-Stellen (zum Beispiel 11, 12, 14) mittels eines übergeordneten Systems festgestellt wird. Gemäß einer solchen Positionsinformation wird sodann ein bestzugeordnetes Abbild eines zu überprüfenden Maschinen-Aggregates samt hervorgehoben dargestellten Mess-Steilen, symbolischen oder konkret erscheinenden Arbeitsanweisungen wiedergegeben. Die konkret erscheinenden Arbeitsanweisungen können dabei auf Video-Aufnahmen mit markierten Mess-Stellen basieren, welche in der Vergangenheit durch Bedienpersonal an der gleichen oder einer vergleichbaren Maschine vorgenommen wurden. Die für eine solche Komfort-Darstellung erforderlichen Video-Daten werden dabei bevorzugt, aber nicht notwendigerweise, von einem übergeordneten Leitrechner drahtlos empfangen. Zu diesem Zweck ist eine Daten-Empfangseinrichtung im Datensammler 20 vorhanden, von der in Figur 1 Teile einer zugehörigen Antenne 22 gezeigt sind. Zu der Daten-Empfangs-Einrichtung gehört eine Daten-Sende-Einrichtung (nicht gezeigt) des Datensammlers 20. Mit den genannten Sende- und Empfangseinrichtungen lässt sich der Datensammler 20 auch vorteilhaft nach Art eines schnurlosen Telefons oder eines Zellular-Telefons benutzen, bei sehr großen industriellen Anlagen wie Ölfeldern oder Solarfarmen auch nach Art eines Satelliten-Telefons. Es versteht sich, dass neben der Möglichkeit einer Sprachübertragung bevorzugt die Möglichkeit der Datenübertragung von und zu einem übergeordneten Rechner bereitgestellt ist, wie dies an sich bekannt ist. Genauso kann jedoch eine drahtlose Datenübertragung an untergeordnete Rechnereinheiten durchgeführt werden.

Anstelle der drahtlosen Anbindung von selbstidentifizierenden Mess-Stellen an die erfindungsgemäße Vorrichtung zum Erfassen von Daten ist es kostengünstiger, drahtgebundene Aufnehmer- und Identifizierungssysteme zu verwenden. Solche Systeme sind an sich aus der Patentliteratur bekannt und unter dem Handelsnamen "VIBCODE" erhältlich. Gemäß der Erfindung ist es von Vorteil, die von solchen selbstidentifizierenden Mess-Stellen abgegebenen oder abrufbaren Identifikations-Informationen dazu zu verwenden, dass deren tatsächliche Position zunächst in eine bildliche Darstellung einer Maschinenhalle, einer Maschine oder eines Maschinenteils mit Mess-Stellen dargestellt wird (das heißt registriert wird) und zu einem späteren Zeitpunkt eben diese bildliche Darstellung eines solchen Objektes auf dem Display der Vorrichtung zu Kontroll- und Orientierungszwecken reproduziert wird.

Auf diese Weise wird einem Benutzer der Erfindung jeweils ersichtlich, dass er einen Messvorgang am korrekten Platz ausführt. Darüber hinaus kann ausgehend von einer so erhaltenen aktuellen Positionsinformation eine (insbesondere automatisch erstellte) visualisierte Information erfolgen, wo und an welcher Stelle die nächstfolgende Messung erfolgen soll. Sofern eine solche Platzierung nicht maßstabsgetreu in einer hochaufgelösten Darstellung der betreffenden Maschine oder eines Objektes (zum Beispiel Wälzlagergehäuse) angezeigt werden kann, kann mit (in das Display der Erfindung einblendbaren) Pfeilsymbolen, Strichen oder dergleichen auf den günstigsten Weg hingewiesen werden, auf dem der nächste anzusteuernde Mess-Stelle erreicht werden kann.

Wiewohl der Datensammler 20 bevorzugt durch Betätigung eines sogenannten Touch-Pads, einer sogenannten Touch-Screen, einer Rollkugel und ähnlichen Eingabevorrichtungen bedient wird, ist zur Auswahl elementarer Funktionen oder zur Eingabe von alphanummerischer Information eine Tastatur 26 vorgesehen.

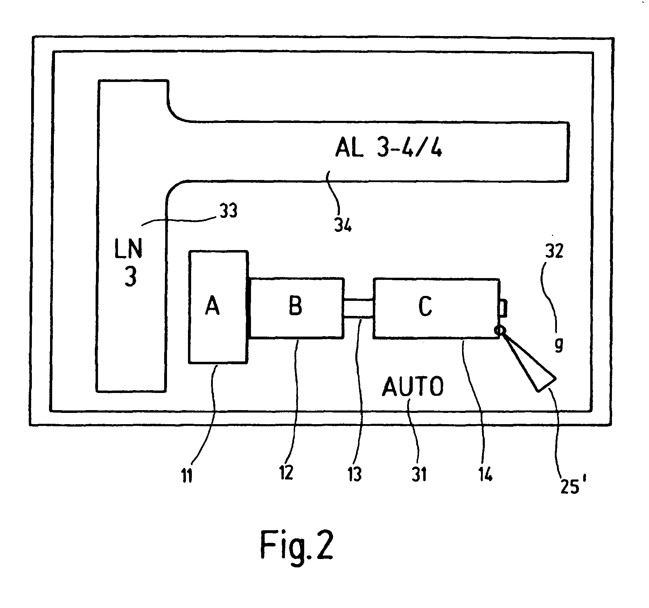

In Figur 2 wird als Beispiel eine andere Visualisierung gezeigt, wie sie auf dem Bildschirm 23 des Datensammlers 20 erscheinen kann. Hierbei handelt es sich um einen Übersichts- oder Lageplan einer Fabrikhalle, für die durch Bezugsziffer 33 eine Hallenstraße mit der Bezeichnung "LN3" wiedergegeben wird, von der ein Maschinengang mit der Bezeichnung "AL 3-4/4" abzweigt (Bezugsziffer 34). Wie ersichtlich und als Orientierungshilfe für einen Nutzer eines Datensammlers 20, sollen die entsprechenden Maschinen 11, 12, 14 relativ zu diesen Orientierungsmerkmalen angeordnet sein. Ein augenfällig hervorgehobenes Symbol oder eine entsprechende Arbeitsanweisung (Bezugsziffer 25') weist auf eine als nächste zu inspizierende Mess-Stelle "g" (Bezugsziffer 32) hin. Mit der eingeblendeten Darstellung "AUTO" (Bezugsziffer 31) wird beispielsweise signalisiert, dass der Datensammler 20 die zu inspizierenden Mess-Stellen vorgibt und der Nutzer/Bedienperson keine Wahlmöglichkeit hinsichtlich Selektion oder Deselektion einer Mess-Stelle hat. Eine solche würde sonst zum Beispiel mit dem Begriff "MANUELL" signalisiert werden. Die im Vorhergehenden beschriebenen Ausführungsformen stellen nur wichtige Beispiele dar. Insgesamt zielt die Erfindung darauf hin, unter Nutzung sogenannter multimedialer Bedien- und Darstellungs-Elemente anfallende Messaufgaben im industriellen Umfeld, speziell bei der systematischen, unverkabelten Erfassung von Schwingungs- und Geräuschdaten, zu erleichtern und vorteilhafter zu gestalten. Dies wird dadurch bewirkt, dass aussagekräftige Informationen hinsichtlich der Mess-Stellen, der Arbeitsaufgaben und der erhaltenen Ergebnisse insbesondere auf grafische (oder in multimedialer Weise) in Kombination miteinander, detailliert und in hoher bildlicher Auflösung dargestellt werden.

### Weitere bevorzugte Ausgestaltungen der Erfindung:

Bevorzugte weitere Ausgestaltungen der Erfindung sind durch folgende Merkmale charakterisiert:

Messergebnisse an einer Mess-Stelle, die an einer Maschine oder einem Aggregat aktuell (oder in der Vergangenheit) erhalten worden sind, können direkt in visueller Weise mit dem Aggregatebild in Zusammenhang gebracht werden. Dies geschieht zum Beispiel in einfacher Weise durch eine Verbindungslinie zwischen dem visualisierten Messergebnis und der betreffenden visualisierten Mess-Stelle an der Maschine. In einer anderen Weise, welche höheren Bedienungskomfort darstellt, wird eine vorrangig zu untersuchende Mess-Stelle einer Maschine durch hervorgehobene (intensivierte, das heißt hellere) Darstellung kenntlich gemacht und ein entsprechendes Messergebnis angezeigt. Anstelle oder zusätzlich zum Messergebnis kann das Resultat einer Bewertung eines Messergebnisses oder das Resultat einer Auswertung einer Mehrzahl von relevanten Messergebnissen in dieser genannten Weise visualisiert werden. Eine diesbezügliche weitere Art der Hervorhebung und Identifizierung von Maschinen, Aggregaten und so weiter besteht darin, diese durch eine farbliche Kodierung mehr oder wenig auffällig auf einem Display wiederzugeben. Beispielsweise kann, je nach Notwendigkeit und vordefiniertem Prioritätsmaß, eine Maschine oder ein Maschinenteil (zum Beispiel Wälzlager) in Bezug zur Mess-Stelle rot dargestellt werden, sofern ein Problem vorhanden ist oder vorzuliegen scheint, oder eher in einer anderen Farbe (zum Beispiel grün, blau, braun, weiß), falls die entsprechenden Maschinen-Parameter in Ordnung zu sein scheinen.

Anstelle einer allgemeinen Farbgebung können die Messergebnisse mit bekannten grafischen Mitteln direkt dem Aggregate-Bild (oder einem Detail-Bild davon) auf einem Display zugeordnet werden, zum Beispiel mit Balkendiagrammen, zugehörigen Grenzwert-Indikatoren, oder zum Beispiel mit zusätzlicher Visualisierung einer Richtung mit Hilfe von pfeilartigen Symbolen. Gerade die Visualisierung einer Richtung (zum Beispiel für die Intensitätsabnahme von Körperschall) kann die genauere Untersuchung der Quelle einer Störung deutlich erleichtern.

Es ist von Vorteil, wenn die erfindungsgemäße Vorrichtung mittels Verknüpfungen stufenweise weitere Kennwerte bilden kann, welche ein Benutzer wahlweise abrufen und in einer oder mehreren Darstellungsarten auf dem Display der erfindungsgemäßen Vorrichtung in Bezug zur Mess-Stelle visualisieren kann oder mittels einer akustischen Signalgabe als relevant darstellen kann.

In weiterer Ausgestaltung der Erfindung werden, je nach dem Resultat einer Bewertung eines einzelnen oder mehrerer Messergebnisse, automatisch oder nach Anforderung durch einen Bediener, zusätzliche Diagnoseverfahren aufgerufen und deren Ergebnisse angezeigt, das heißt in Relation zu einer oder mehreren Mess-Stellen der Maschinen oder deren Teilen visualisiert. Solche Diagnoseverfahren können zum Beispiel auf Frequenzanalysen, Darstellung von Zeitsignalen, Häufigkeitsverteilungs-Untersuchungen und ähnlichen Abbildungen beruhen.

Werden Schwingungen untersucht, ist es fallweise von Interesse, eine dominierende Schwingungsform eines Bauteils oder einer ganzen Maschine zu untersuchen und darzustellen. Ein durch die erfindungsgemäße Vorrichtung erhaltenes diesbezügliches Messergehnis (nach Messung an mehreren Mess-Stellen) kann grafisch per Betrag und zugeordneter Richtung der lokalen Schwingungsvektoren an Mess-Stellen dargestellt werden. Solche Schwingungsvektoren können insbesondere solche sein, die einer ausgewählten Frequenzkomponente zugeordnet werden können, zum Beispiel einer Eigenfrequenz, oder einer sonst wie dominierenden Frequenz einer Maschine oder eines Maschinenteils.

Neben der vorteilhaften grafischen Visualisierung auf einem Bildschirm kann zusätzlich, eventuell auch nur alleine, eine Informationsausgabe auf akustischem Wege, zum Beispiel mittels Lautsprecher oder Kopfhörer, von ergänzendem Vorteil sein. Dies kann zum Beispiel ein gesprochener Kommentar oder Hinweis an den Benutzer sein oder die sprachliche Formulierung eines nächsten Arbeitsschrittes an einer nächsten Mess-Stelle. In weiterer Ausgestaltung der Erfindung kann dies auch die Ausgabe eines genau definierten Referenztones sein, gegen den ein Maschinengeräusch dann subjektiv verglichen werden kann. Gemäß der Erfindung ist es dann möglich, das Ergebnis eines solchen subjektiven Vergleiches per Spracheingabe festzuhalten, das heißt zu dokumentieren. Hierbei kann eine solche gesprochene Information in einem Speicher des Gerätes für anschließende Wiedergabe festgehalten werden oder drahtlos an einen übergeordneten Sprachspeicher weitergegeben werden.

Werden mittels der erfindungsgemäßen Vorrichtung an der Mess-Stelle an einem Maschinenaggregat, einer einzelnen Maschine oder an einzelnen Maschinenteilen ungewöhnliche, abweichende oder insbesondere kritische Zustände gemessen, so können die Daten solcher Vorkommnisse nicht nur registriert und visualisiert werden, sondern es können auch Anweisungen und maschinengesteuerte Ausgaben von Hilfs-Informationen betreffend vorzunehmender Instandhaltungsarbeiten visualisiert werden. Solche Instandhaltungsarbeiten betreffen beispielsweise das Auswuchten von Maschinenteilen, das Ausrichten von Maschinenteilen oder die Kontrolle von Befestigungselementen.

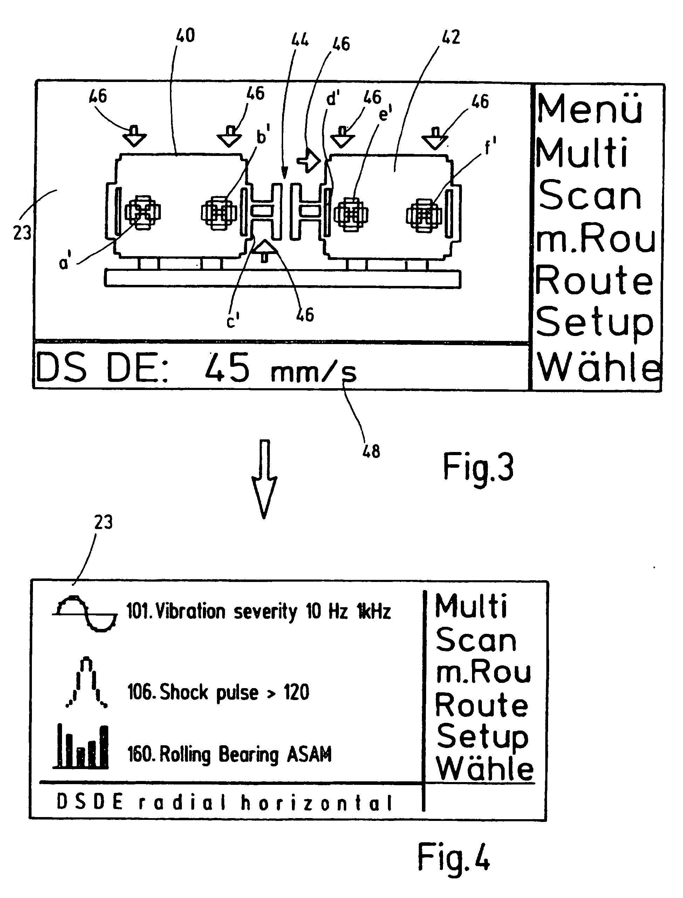

In den Figuren 3 und 4 ist die Erfindung anhand eines weiteren konkreten Beispiels verdeutlicht. In den Figuren ist jeweils der Bildschirm 23 des Datensammelgerätes 20 dargestellt. Der Bildschirm 23 gibt nach Aufruf ein zu überprüfendes Messobjekt bildlich/grafisch wieder. Dieses Messobjekt ist beispielsweise aus dem Lageplan einer Fabrikhalle oder dergleichen (Figur 2) ausgewählt. Im gezeigten Beispiel ist eine Antriebsmaschine 40 und eine von der Antriebsmaschine 40 angetriebene Pumpe 42 dargestellt. Diese sind über eine Kupplung 44 miteinander gekuppelt. Der Bedienperson wird auf dem Bildschirm 23 des Datensammelgerätes 20 die Antriebsmaschine 40 und die Pumpe 42 mit ihren möglichen Mess-Stellen a', b', c', d', e' und f' dargestellt. Diese Mess-Stellen sind an ihrer tatsächlichen räumlichen Anordnung an den Aggregaten auf der Darstellung kenntlich gemacht. Zusätzlich sind Pfeile 46 dargestellt, die nochmals deutlich in die Richtung der Mess-Stellen zeigen. Die Bedienperson des Datensammelgerätes 20 kann nunmehr eine der Mess-Stellen a', b', c', d', e', f' auswählen und erkennt sofort, wo diese Mess-Stelle konkret an den Aggregaten angeordnet ist. Bei dem hier dargestellten konkreten Ausführungsbeispiel soll davon ausgegangen werden, dass die Mess-Stelle e' die ausgewählte Mess-Stelle sein soll. In einer Statuszeile 48 des Bildschirms 23 wird die ausgewählte Mess-Stelle e' nochmals eindeutig definiert. Im gezeigten Beispiel gibt die Statuszeile wieder "DS DE: 4,5 mm/s", wobei DS Drive Shaft (Antriebswelle) und DE Drive End (Antriebsseite) bedeutet. Gleichzeitig erfolgt eine Schwingwertangabe über die aktuelle Ist-Schwingung der Maschine.

Um die Bedienerführung zu vereinfachen, kann die ausgewählte Mess-Stelle durch eine farbliche Änderung des der Mess-Stelle e' zugeordneten Pfeils 46 oder durch dessen Aufblinken oder auf andere geeignete Weise nochmals deutlich hervorgehoben werden. Nach Auswahl der Mess-Stelle e' springt die Darstellung auf dem Bildschirm 23 in die an der Mess-Stelle e' möglichen durchzuführenden Messaufgaben. Hierzu ist in Figur 4 beispielhaft dargestellt, dass entweder eine Messaufgabe 101 Schwingungsmessung (Vibration severity 10 Hz bis 1 kHz), eine Messaufgabe 106 Impulsmessung (Shock pulse > 120) oder eine Messaufgabe 160 Unwucht (Rolling Bearing ASAM) ausgewählt werden. Durch Menüführung wird eine der für die ausgewählte Mess-Stelle e' vorgegebene Messaufgabe ausgewählt. Daraufhin wird durch das Datensammelgerät 20 die jeweilige Messaufgabe ausgeführt. Die jeweilig ermittelten Messergebnisse können durch weiteres Umspringen der Darstellung auf dem Bildschirm 23 gleich angezeigt werden (ist nicht dargestellt). Die Messergebnisse werden durch das Datensammelgerät 20 erfasst und gespeichert. Hierbei kann die Speicherung entweder als Zwischenspeicherung erfolgen und/oder gleichzeitig einem übergeordneten System zur weiteren Erfassung, Archivierung und/oder Auswertung überspielt werden. Dies kann beispielsweise über die bereits erwähnte Funkübertragung zwischen Datensammelgerät und übergeordnetem System erfolgen.

## Patentansprüche

1. Vorrichtung zum Erfassen von Schwingungssignalen und/oder Körperschallsignalen eines technischen Systems, das wenigstens ein Messobjekt (11, 12, 13, 14) umfasst, mit einer tragbaren Datensammeleinrichtun (20), die mit den wenigstens einem Messobjekt zugeordneten Mess-Stellen (a, b, c, d, e, f) verbindbar ist, und die Bedien- und Funktionseinrichtungen (26) aufweist, mittels denen wenigstens eine Messaufgabe an wenigstens einer der Mess-Stellen abarbeitbar, ist, und wenigstens ein hieraus resultierendes Messergebnis erfassbar ist, wobei die Datensammeleinrichtung (20) wenigstens ein Speichermittel (35) umfasst, in dem das wenigstens eine Messobjekt (11, 12, 13, 14) mit seinen Mess-Stellen (a, b, c, d, e, f) derart abgelegt ist, dass dieses auf einer Anzeigeeinrichtung (23) des Datensammelgerätes (20) dargestellt ist, wobei die Darstellung die Anordnung des wenigstens einen Messobjektes (11, 12, 13, 14) mit seinen Mess-Stellen (a, b, c, d, e, f) umfasst, anhand dieser Darstellung von einer Bedienperson eine beliebige oder vorgegebene der dargestellten Meas-Stellen (a, b, c, d, e, f) auswählbar ist und für die ausgewählte Mess-Stelle (f) die wenigstens eine Messaufgabe abrufbar ist,
**dadurch gekennzeichnet, dass**
das wenigstens eine Messobjekt (11, 12, 13, 14) mit seinen Mess-Stellen (a, b, c, d, e, f) derart abgelegt ist, dass dieses auf einer Anzeigeeinrichtung (23) des Datensammelgerätes (20) bildlich/grafisch dargestellt ist.

2. Vorrichtung nach Anspruch 1, **dadurch gekennzeichnet, dass** nach Abarbeitung der wenigstens einen Messaufgabe wenigstens eine weitere Messaufgabe der ausgewählten Mess-Stelle (f) abarbeitbar ist.

3. Vorrichtung nach einem der vorhergehenden Ansprüche, **dadurch gekeiznzeichnet, dass** nach Abarbeitung der wenigstens einen Messaufgabe der ausgewählten Mess-Stelle (f) die Datensammeleinrichtung (20) automatisch die der ausgewählten Mess-Stelle (f) in der bildlichen/grafischen Garstellung räumlich nächstliegende Mess-Stelle (a, b, c, d, e) aufruft.

4. Vorrichtung nach einem der vorhergehenden Ansprüche, **dadurch gekennzeichnet, dass** das tragbare Datensammelgerät (20) Daten über eine drahtlose oder drahtgebundene Datenübertragungseinrichtung an einen übergeordneten Rechner senden oder von einem solchen empfangen kann.

5. Vorrichtung nach einem der vorhergehenden Ansprüche, **dadurch gekennzeichnet, dass** das tragbare Datensammelgerät (20) mit Messwertaufnehmern (21) ausgestattet ist, welche zusätzlich eine automatische Mess-Stellenerkennung ermöglichen.

6. Vorrichtung nach einem der vorhergehenden Ansprüche, **dadurch gekennzeichnet, dass** das tragbare Datensammelgerät (20) die geometrische Anordnung einzelner zu inspizierender Mess-Stelleq (a, b, c, d, e, f) an einer oder mehreren Maschinen bildlich visualisieren kann.

7. Vorrichtung nach einem der vorhergehenden Ansprüche, **dadurch gekennzeichnet, dass** das tragbare Datensammelgerät (20) die Anordnung einzelner wahlweise zu inspizierender Mess-Stellen (a, b, c, d, e, f) an einer oder mehreren Maschinen bildlich visualisieren kann.

8. Vorrichtung nach einem der vorhergehenden Ansprüche, **dadurch gekennzeichnet, dass** das tragbare Datensammelgerät (20) eine geografisch oder systematisch geordnete Ubersicht inspizierbarer Mess-Stellen (a, b, c, d, e, f) bildlich grafisch visualisieren kann.

9. Vorrichtung nach einem der vorhergehenden Ansprüche, **dadurch gekennzeichnet, dass** das tragbare Datensammelgerät (20) die Visualisierung anhand einer fotografischen Darstellung einer Maschine oder eines Maschinenverbundes mit Mesa-Stellen (a, b, c, d, e, f) durchführt

10. Vorrichtung nach einem der vorhergehenden Ansprüche, **dadurch gekennzeichnet, dass** das tragbare Datensammelgerät (20) die Visualisierung anhand einer fotografischen Darstellung eines großflächigen technischen Systems mit Mens-Stellen (a, b, c, d, e, f) durchführt.

11. Vorrichtung nach einem der vorhergehenden Ansprüche, wobei die Visualisierung unter zuhilfenehmender Darstellung eines Lageplans, einer Maschinenhalle oder eines Werksgeländes ausführt wird.

12. Vorrichtung nach einem der vorhergehenden Ansprüche, wobei die Visualisierung anhand eines Anlagenplans ausführt wird.

13. Vorrichtung nach einem der vorhergehenden Ansprüche, **gekennzeichnet durch** eine gleichzeitige Visualisierung von geografischen Übersichtsdaten und von detaillierten Positionsdaten für eine Mess-Stelle (a, b, c, d, e, f), in zwei oder mehreren Bildschirmbereichen.

14. Vorrichtung nach einem der vorhergehenden Anspruche, **gekennzeichnet durch** eine dynamische Visualisierung, bei der ein aktueller Standort eines Nutzers oder einer Bedienperson berücksichtigt wird und diesem Nutzer eine perspektivisch angenähert korrekte Ansicht eines technischen Systems oder einer Maschine mit Mess-Stellen (a, b, c, d, e, f) präsentiert werden kann.

15. Vorrichtung nach einem der vorhergehenden Anspruche, **gekennzeichnet durch** eine statische oder dynamische Visualisierung, bei der mindestens ein aktuell oder vorgängig erhaltenes Messergebnis in Bezug zur Mess-Stelle (a, b, c, d, e, f) gleichzeitig und **durch** Einblendung bildlich visualisiert wird.

16. Vorrichtung nach einem der vorhergehenden Ansprüche, **dadurch gekennzeichnet, dass** insbesondere solche Messdaten zu berücksichtigbar und bildlich visualisierbar sind, welche einem als kritisch zu bewertenden Messergebnis an Mess-Stellen (a, b, c, d, e, f) zugeordnet werden können.

17. Vorrichtung nach einem der vorhergehenden Ansprüche, **dadurch gekennzeichnet, dass** eine abzuarbeitende Anordnung von Mess-Stellen (a, b, c, d, e, f) in hochauflösendener bildlicher Darstellung an einem Messobjekt visualisierbar ist.

18. Vorrichtung nach einem der vorhergehenden Ansprüche, **dadurch gekennzeichnet, dass** sofort auszuführende Maßnahmen mittels einer per bildlicher und hochaufgelöster Darstellung vorgegebenen Arbeitsanweisung an eine Bedienperson oder einen Benutzer in Bezug zu Mess-Stellen (a, b, c, d, e, f) signalisierbar sind, wobei entweder Einzelbilder oder ein vollständige Bewegungsablauf darstellbar sind beziehungsweise ist.

19. Vorrichtung nach einem der vorhergehenden Ansprüche, **gekennzeichnet durch** eine grafische Benutzeroberfläche, zur Visualisierung der in den vorgenannten Ansprüchen spezifizierten Informationen an Mess-Stellen, und mit einer Eingabemöglichkeit für vordefinierte, **durch** ein grafisches Element repräsentierte Eingabedaten oder -funktionen, oder zur Aktivierung oder Modifikation eines datenmäßig zu verarbeitenden Objektes mit Mess-Stellen.

20. Vorrichtung nach einem der vorhergehenden Ansprüche, **gekennzeichnet durch** eine grafische Benutzeroberfläche, welche interaktive Flächenbereiche der Mess-Stellen oder Punkte zur grafischen Repräsentation eines datenmäßig zu verarbeitenden Objektes aufweist, wobei die grafische Benutzeroberfläche dazu geeignet ist, eine Aktivierung, Abwahl, Übergehen oder eine Modifizierung der Mess-Stellen eines solchen Objektes zu initiieren.

21. Vorrichtung nach einem der vorhergehenden Ansprüche, **gekennzeichnet durch** eine grafische Benutzeroberfläche, welche blinkende, farbige oder invers dargestellte Bildelemente zur Verfügung stellt oder geeignet ist, eine Ausgabe von Messergebnissen in symbolhafter Form, insbesondere mittels Balken-, Kreis- oder Komponenten-Diagrammen, in Bezug zu Mess-Stellen durchzuführen.

22. Vorrichtung nach einem der vorhergehenden Ansprüche, **gekennzeichnet durch** eine zusätzliche und gleichzeitige Ausgabe von Messergebnissen an Mess-Stellen in Überlagerter alphanummerischer Darstellung oder in überlagerter funktionsmäßiger Darstellung mit kartesischen oder Polar-Koordinaten.

23. Vorrichtung nach einem der vorhergehenden Ansprüche, **gekennzeichnet durch** eine grafische Benutzeroberfläche, **durch** welche eine vergrößerte Darstellung einzelner Teilbereiche der Mess-Stellen eines hochauflösenden Bildschirms ausführbar ist.

24. Vorrichtung nach einem der vorhergehenden Ansprüche, **dadurch gekennzeichnet, dass** ein Abbild einer Maschine oder eines Maschinenteils visualisiert wird unter Verwendung von Identifikationsdaten, die von einer selbstidentifizierenden Mess-Stelle in der Vorrichtung zugeordnet werden.

25. Vorrichtung nach einem der vorhergehenden Ansprüche, **dadurch gekennzeichnet, dass** ein Messergebnis und dessen Be- und Auswertung mit bekannten grafischen Mitteln direkt im Aggregatebild zu Mess-Stellen (a, b, c, d, e, f) zugeordnet dargestellt werden kann, wie mit Balken und Grenzwerten, und/oder richtungsbezogen mit Pfeillänge, Pfeilstärke oder mittels Kreisdurchmessern, so dass eine Mess-Stelle und bewertete Bauteile eines zugehörigen Gesamtaggregates insgesamt sofort grafisch unterstützt bewertet werden können.

26. Vorrichtung nach einem der vorhergehenden Ansprüche, **dadurch gekennzeichnet, dass** aus den Messergebnissen durch Verknüpfungen stufenweise weitere Kennwerte gebildet und festgelegt oder wahlweise vom Benutzer abgerufen dargestellt werden können.

27. Vorrichtung nach einem der vorhergehenden Ansprüche, **dadurch gekennzeichnet, dass** aus einem Bewertungsergebnis jeweils tiefer diagnostizierende Messverfahren wie Frequenzspektren oder Zeitsignale, Verteilungsfunktionen stufenweise festgelegt durchgeführt werden oder wahlweise vom Benutzer aufruf- und abarbeitbar sind, wobei die Bewertung solcher Ergebnisse auf vergleichbare Art durchführbar ist.

28. Vorrichtung nach einem der vorhergehenden Ansprüche, **dadurch gekennzeichnet, dass** das Ergebnis einer Auswertung von Messungen durch Hervorhebung von dargestellten fehlerhaften Aggregaten, Maschinen, Baugruppen oder Bauteilen in einer oder mehreren grafischen Ebenen einer Anzeige (Display) in Bezug zu Mess-Stellen (a, b, c, d, e, f) visualisierbar ist.

29. Vorrichtung nach einem der vorhergehenden Ansprüche, **dadurch gekennzeichnet, dass** eine Führung oder Information eines Benutzers an Mess-Stellen (a, b, c, d, e, f) in zusätzlich akustischer Weise durchführbar ist, insbesondere in Form von sprachlichen Kommentaren, welche mittels Kopfhörern wiedergegeben werden und welche sich auf eine gleichzeitig visualisierte Information beziehen.

30. Verfahren zum Erfassen von Schwingungssignalen und/oder Körperschallsignalen eines technischen Systems, wobei eine tragbare Datensammeleinrichtung (20) mit einer Mess-Stelle (a, b, c, d, e, f) eines Messobjektes (11, 12, 13, 14) verbunden wird und wenigstens eine Messaufgabe an der Mess-Stelle abgearbeitet wird und ein erhaltenes Messergebnis erfasst wird, wobei das wenigstens eine Messobjekt (11, 12, 13, 14) auf einer Anzeigeeinrichtung (23) des Datensammelgerätes (20) dargestellt ist, wobei die Mess-Stellen (a, b, c, d, e, f) des Messobjektes (11, 12, 13, 14) mit dargestellt werden und eine Bedienperson eine beliebige oder vorgegebene der dargestellten Mess-Stellen (a, b, c, d, e, f) auswählt und für die ausgewählte Mess-Stelle (f) die wenigstens eine Messaufgabe abgearbeitet wird,
**dadurch gekennzeichnet, dass**
das wenigstens eine Messobjekt (11, 12, 13, 14) auf einer Anzeigeeinrichtung (23) des Datensammelgerätes (20) bildlich/grafisch dargestellt ist.

## Claims

1. Apparatus for detecting vibration signals and/or structure-borne noise signals of a technical system which comprises at least one object under test (11, 12, 13, 14), having a portable data collection device (20) which can be connected to measuring points (a, b, c, d, e, f) assigned to the at least one object under test, and which has operating and functional devices (26) by means of which at least one measurement task can be executed at at least one of the measuring points, and at least one measurement result resulting therefrom can be detected, the data collection device (20) comprising at least one storage means (35) in which the at least one object under test (11, 12, 13, 14) is stored with its measuring points (a, b, c, d, e, f) in such a way that said object is represented on a display device (23) of the data collection unit (20), the display comprising the arrangement of the at least one object under test (11, 12, 13, 14) with its measuring points (a, b, c, d, e, f), it being possible for an operator to use this display to select an arbitrary one or a predetermined one of the measuring points (a, b, c, d, e, f) represented, and it being possible to call the at least one measurement task for the selected measuring point (f),
**characterized in that** the at least one object under test (11, 12, 13, 14) is stored with its measuring points (a, b, c, d, e, f) in such a way that said object is represented pictorially/graphically on a display device (23) of the data collection unit (20).

2. Apparatus according to Claim 1, **characterized in that** after execution of the at least one measurement task at least one further measurement task of the selected measuring point (f) can be executed.

3. Apparatus according to one of the preceding claims, **characterized in that** after execution of the at least one measurement task of the selected measuring point (f) the data collection device (20) automatically calls the measuring point (a, b, c, d, e) spatially closest to the selected measuring point (f) in the pictorial/graphic display.

4. Apparatus according to one of the preceding claims, **characterized in that** the portable data collection unit (20) can transmit data to, or receive it from, a higher-level computer via a wireless or hardwired data transmitting device.

5. Apparatus according to one of the preceding claims, **characterized in that** the portable data collection unit (20) is fitted with measuring sensors (21) which additionally permit automatic measuring point recognition.

6. Apparatus according to one of the preceding claims, **characterized in that** the portable data collection unit (20) can pictorially visualize on one or more machines the geometrical arrangement of individual measuring points (a, b, c, d, e, f) to be inspected.

7. Apparatus according to one of the preceding claims, **characterized in that** the portable data collection unit (20) can pictorially visualize on one or more machines the arrangement of individual measuring points (a, b, c, d, e, f) to be inspected optionally.

8. Apparatus according to one of the preceding claims, **characterized in that** the portable data collection unit (20) can pictorially/graphically visualize a geographically or systematically ordered overview of inspectable measuring points (a, b, c, d, e, f).

9. Apparatus according to one of the preceding claims, **characterized in that** the portable data collection unit (20) carries out the visualization with the aid of a photographic representation of a machine or a machine combination with measuring points (a, b, c, d, e, f).

10. Apparatus according to one of the preceding claims, **characterized in that** the portable data collection unit (20) carries out the visualization with the aid of a photographic representation of a large-area technical system with measuring points (a, b, c, d, e, f).

11. Apparatus according to one of the preceding claims, the visualization being carried out with an auxiliary display of a layout map, machine shop or a works site.

12. Apparatus according to one of the preceding claims, the visualization being carried out with the aid of an installation map.

13. Apparatus according to one of the preceding claims, **characterized by** simultaneous visualization of graphic overview data and of detailed position data for a measuring point (a, b, c, d, e, f), in two or more display screen areas.

14. Apparatus according to one of the preceding claims, **characterized by** a dynamic visualization in which account is taken of a current location of a user or an operator, and this user can be presented with a view of a technical system or a machine with measuring points (a, b, c, d, e, f) which is approximately correct in terms of perspective.

15. Apparatus according to one of the preceding claims, **characterized by** a static or dynamic visualization in which at least one measurement result currently or previously obtained is pictorially visualized simultaneously and by overlaying with reference to the measurement point (a, b, c, d, e, f).

16. Apparatus according to one of the preceding claims, **characterized in that** it is to be possible to take into account and pictorially visualize in particular those measured data which can be assigned at measuring points (a, b, c, d, e, f) to a measurement result which is to be assessed as critical.

17. Apparatus according to one of the preceding claims, **characterized in that** an arrangement of measuring points (a, b, c, d, e, f) which is to be executed can be visualized in a high-resolution pictorial display on an object under test.

18. Apparatus according to one of the preceding claims, **characterized in that** measures to be carried out immediately can be signaled to an operator or a user with reference to measuring points (a, b, c, d, e, f) by means of a work instruction prescribed by a pictorial and high-resolution display, it being possible to represent either individual images or a complete sequence of motions.

19. Apparatus according to one of the preceding claims, **characterized by** a graphic user interface for visualizing the information, specified in the foregoing claims, at measuring points, and having the possibility of inputting predefined input data or input functions represented by a graphic element, or for activating or modifying an object with measuring points which is to be processed in terms of data.

20. Apparatus according to one of the preceding claims, **characterized by** a graphic user interface which has interactive subareas of the measuring points or points for graphic representation of an object to be processed in terms of data, the graphic user interface being suitable for initiating activation, deselection, transition or modification of the measuring points of such an object.

21. Apparatus according to one of the preceding claims, **characterized by** a graphic user interface which makes available flashing, colored or inversely represented graphic display elements, or is suitable for outputting measurement results with respect to measuring points in symbolic form, in particular by means of bar, pie or component diagrams.

22. Apparatus according to one of the preceding claims, **characterized by** additional and simultaneous outputting of measurement results at measuring points in a superimposed alphanumeric display or in a superimposed functional display using Cartesian or polar coordinates.

23. Apparatus according to one of the preceding claims, **characterized by** a graphic user interface by means of which it is possible to carry out an enlarged representation of individual subareas of the measuring points of a high-resolution display screen.

24. Apparatus according to one of the preceding claims, **characterized in that** an image of a machine or a machine part is visualized by using identification data which are assigned by a self-identifying measuring point in the apparatus.

25. Apparatus according to one of the preceding claims, **characterized in that** a measurement result and the assessment and evaluation thereof can be displayed using known graphic means directly in the aggregate image in a fashion assigned to measuring points (a, b, c, d, e, f), for example with the aid of bars and limiting values and/or with reference to the direction with the aid of arrow length, arrow thickness or by means of circle diameters, so that a measuring point and assessed components of an associated overall assembly can be assessed as a whole immediately in a graphically supported fashion.

26. Apparatus according to one of the preceding claims, **characterized in that** further characteristic values can be formed in steps from the measurement results by combinations and fixed or can optionally be displayed in a fashion called by the user.

27. Apparatus according to one of the preceding claims, **characterized in that** more deeply diagnosing measurement methods, such as frequency spectra or time signals and distribution functions, can respectively be carried out from an assessment result in a fashion fixed in steps, or can optionally be called and executed by the user, it being possible for such results to be assessed in a comparable way.

28. Apparatus according to one of the preceding claims, **characterized in that** the result of an evaluation of measurements can be visualized by highlighting represented defective assemblies, machines, subassemblies or components on one or more graphic planes of a display with reference to measuring points (a, b, c, d, e, f).

29. Apparatus according to one of the preceding claims, **characterized in that** at measuring points (a, b, c, d, e, f) a user can be guided or informed in an additionally acoustic way, in particular in the form of voice commentaries which are reproduced by means of headphones and which refer to simultaneously visualized information.

30. Method for detecting vibration signals and/or structure-borne noise signals of a technical system, a portable data collection device (20) being connected to a measuring point (a, b, c, d, e, f) of an object under test (11, 12, 13, 14), and at least one measurement task being executed at the measuring point and a measurement result obtained being detected, the at least one object under test (11, 12, 13, 14) being represented on a display device (23) of the data collection unit (20), in which case the measuring points (a, b, c, d, e, f) of the object under test (11, 12, 13, 14) are also displayed, and an operator selects an arbitrary one or a predetermined one of the measuring points (a, b, c, d, e, f) displayed, and the at least one measurement task is executed for the selected measuring point (f),
**characterized in that** the at least one object under test (11, 12, 13, 14) is pictorially/graphically represented on a display device (23) of the data collection unit (20).

## Revendications

1. Dispositif pour l'acquisition de signaux de vibration et/ou de signaux de bruit structurel d'un système technique, qui comprend au moins un objet à mesurer (11, 12, 13, 14), doté d'un dispositif portable de collecte de données (20), qui peut être relié aux points de mesure (a, b, c, d, e, f) attribués à au moins un objet à mesurer, et qui présente des dispositifs de commande et de fonction (26), au moyen desquels au moins une tâche de mesure peut être traitée sur au moins l'un des points de mesure, et au moins un résultat de mesure en résultant peut être enregistré, le dispositif de collecte de données (20) comprenant au moins un moyen de stockage (35), dans lequel le au moins un objet à mesurer (11, 12, 13, 14) est déposé avec ses points de mesure (a, b, c, d, e, f) de telle sorte que cet objet soit représenté sur un dispositif d'affichage (23) de l'appareil de collecte de données (20), la représentation comprenant l'agencement du au moins un objet à mesurer (11, 12, 13, 14), avec ses points de mesure (a, b, c, d, e, f), un point de mesure quelconque ou prédéfini des points de mesure (a, b, c, d, e, f) représentés pouvant être sélectionné à l'aide de cette représentation et la au moins une tâche de mesure pouvant être appelée pour le point de mesure (f) sélectionné,
**caractérisé en ce que**
le au moins un objet à mesurer (11, 12, 13, 14) est déposé avec ses points de mesure (a, b, c, d, e, f) de telle sorte que cet objet est représenté en image/graphiquement sur un dispositif d'affichage (23) de l'appareil de collecte de données (20).

2. Dispositif selon la revendication 1, **caractérisé en ce que,** après le traitement de la au moins une tâche de mesure, au moins une autre tâche de mesure du point de mesure (f) sélectionné peut être traitée.

3. Dispositif selon l'une quelconque des revendications précédentes, **caractérisé en ce que,** après le traitement de la au moins une tâche de mesure du point de mesure (f) sélectionné, le dispositif de collecte de données (20) appelle automatiquement le point de mesure (a, b, c, d, e) le plus proche dans l'espace du point de mesure (f) sélectionné dans la représentation en image/graphique.

4. Dispositif selon l'une quelconque des revendications précédentes, **caractérisé en ce que** l'appareil portable de collecte de données (20) peut envoyer des données, par un dispositif de transmission de données sans fil ou relié par un fil à un ordinateur prioritaire et peut en recevoir d'un tel ordinateur.

5. Dispositif selon l'une quelconque des revendications précédentes, **caractérisé en ce que** l'appareil portable de collecte de données (20) est équipé d'enregistreurs de valeurs de mesure (21) qui permettent en supplément une détection automatique des points de mesure.

6. Dispositif selon l'une quelconque des revendications précédentes, **caractérisé en ce que** l'appareil portable de collecte de données (20) peut visualiser en image l'agencement géométrique de certains points de mesure (a, b, c, d, e, f) à inspecter sur une ou plusieurs machines.

7. Dispositif selon l'une quelconque des revendications précédentes, **caractérisé en ce que** l'appareil portable de collecte de données (20) peut visualiser en image l'agencement de points de mesure (a, b, c, d, e, f) individuels à inspecter au choix sur une ou plusieurs machines.

8. Dispositif selon l'une quelconque des revendications précédentes, **caractérisé en ce que** l'appareil portable de collecte de données (20) peut visualiser en image et graphiquement un aperçu, ordonné de façon géographique ou systématique, de points de mesure (a, b, c, d, e, f) pouvant être inspectés.

9. Dispositif selon l'une quelconque des revendications précédentes, **caractérisé en ce que** l'appareil portable de collecte de données (20) effectue la visualisation à l'aide d'une représentation photographique d'une machine ou d'un ensemble de machines avec des points de mesure (a, b, c, d, e, f).

10. Dispositif selon l'une quelconque des revendications précédentes, **caractérisé en ce que** l'appareil portable de collecte de données (20) effectue la visualisation à l'aide d'une représentation photographique d'un système technique à grande surface avec des points de mesure (a, b, c, d, e, f).

11. Dispositif selon l'une quelconque des revendications précédentes, la visualisation étant effectuée à l'aide d'une représentation d'assistance d'un plan de situation, d'un hall de machines ou d'un terrain d'usine.

12. Dispositif selon l'une quelconque des revendications précédentes, la visualisation étant effectuée à l'aide d'un plan d'installation.

13. Dispositif selon l'une quelconque des revendications précédentes, **caractérisé par** une visualisation simultanée de donnés d'ensemble géographiques et de données de position détaillées pour un point de mesure (a, b, c, d, e, f) dans deux ou plusieurs zones d'écran.

14. Dispositif selon l'une quelconque des revendications précédentes, **caractérisé par** une visualisation dynamique, sur laquelle un emplacement actuel d'un utilisateur ou d'un opérateur est pris en compte et une vue correcte de façon approchée en perspective d'un système technique ou d'une machine avec des points de mesure (a, b, c, d, e, f) peut être présentée à cet utilisateur.

15. Dispositif selon l'une quelconque des revendications précédentes, **caractérisé par** une visualisation statique ou dynamique, sur laquelle au moins un résultat de mesure obtenu actuellement ou précédemment est visualisé en image par rapport au point de mesure (a, b, c, d, e, f) simultanément ou par insertion à l'écran.

16. Dispositif selon l'une quelconque des revendications précédentes, **caractérisé en ce que** en particulier de telles données de mesure peuvent être prises en compte et visualisées en image, lesquelles données peuvent être attribuées à un résultat de mesure à évaluer de façon critique sur des points de mesure (a, b, c, d, e, f).

17. Dispositif selon l'une quelconque des revendications précédentes, **caractérisé en ce qu'**un agencement à traiter de points de mesure (a, b, c, d, e, f) peut être visualisé dans une représentation en image à haute résolution sur un objet à mesurer.

18. Dispositif selon l'une quelconque des revendications précédentes, **caractérisé en ce que** des mesures à mettre en oeuvre immédiatement peuvent être signalées au moyen d'une directive de travail prédéfinie par une représentation en image et avec une haute résolution à un opérateur ou un utilisateur par rapport à des points de mesure (a, b, c, d, e, f), des images individuelles ou un déroulement de mouvement complet pouvant être représenté(s).

19. Dispositif selon l'une quelconque des revendications précédentes, **caractérisé par** une interface utilisateur graphique, pour la visualisation des informations spécifiées dans les revendications susmentionnées en des points de mesure, et avec une possibilité d'entrer pour des données ou des fonctions d'entrée prédéfinies et représentées par un élément graphique, ou pour l'activation ou la modification d'un objet à traiter au niveau des données avec des points de mesure.

20. Dispositif selon l'une quelconque des revendications précédentes, **caractérisé par** une interface utilisateur graphique, qui présente des zones de surface interactives des points de mesure ou des points pour la représentation graphique d'un objet à traiter au niveau des données, l'interface utilisateur graphique étant appropriée pour amorcer une activation, une désélection, un effacement ou une modification des points de mesure d'un tel objet.

21. Dispositif selon l'une quelconque des revendications précédentes, **caractérisé par** une interface utilisateur graphique, qui met à disposition des éléments d'image clignotants, en couleur ou représentés de façon inversée ou est appropriée pour effectuer une édition de résultats de mesure sous une forme symbolique, en particulier au moyen de diagrammes en barres, en cercles ou avec des diagrammes de composants, par rapport à des points de mesure.

22. Dispositif selon l'une quelconque des revendications précédentes, **caractérisé par** une édition supplémentaire et simultanée de résultats de mesure en des points de mesure dans une représentation alphanumérique superposée ou dans une représentation fonctionnelle superposée avec des coordonnées cartésiennes ou des coordonnées polaires.

23. Dispositif selon l'une quelconque des revendications précédentes, **caractérisé par** une interface utilisateur graphique, par laquelle une représentation agrandie de certaines zones partielles des points de mesure d'un écran à haute résolution peut être réalisée.

24. Dispositif selon l'une quelconque des revendications précédentes, **caractérisé en ce qu'**une illustration d'une machine ou une partie de machine est visualisée avec l'utilisation de données d'identification qui sont attribuées par un point de mesure auto-identifiant dans le dispositif.

25. Dispositif selon l'une quelconque des revendications précédentes, **caractérisé en ce qu'**un résultat de mesure et son analyse et son évaluation peuvent être représentés avec des moyens graphiques connus directement dans l'image du groupe avec une attribution à des points de mesure (a, b, c, d, e, f), comme avec des barres et des valeurs limites et/ou, par rapport à la direction, avec une longueur de flèche, une épaisseur de flèche ou au moyen de diamètres de cercle, de sorte qu'un point de mesure et des composants évalués d'un groupe global spécifique peuvent être évalués globalement immédiatement avec une assistance graphique.

26. Dispositif selon l'une quelconque des revendications précédentes, **caractérisé en ce que** d'autres valeurs caractéristiques sont formées et définies de façon progressive à partir des résultats de mesure par des enchaînements ou peuvent être représentées appelées de façon sélective par l'utilisateur.

27. Dispositif selon l'une quelconque des revendications précédentes, **caractérisé en ce que,** à partir d'un résultat d'évaluation de procédés de mesure diagnostiquant respectivement à un niveau plus bas tels que des spectres de fréquence ou des signaux de temps, des fonctions de répartition sont mises en oeuvre de façon définie et progressivement ou pouvant être appelées et traitées de façon sélective par l'utilisateur, l'évaluation de tels résultats pouvant être réalisée de façon similaire.

28. Dispositif selon l'une quelconque des revendications précédentes, **caractérisé en ce que** le résultat d'une analyse de mesures peut être visualisé par la mise en évidence de groupes, machines, ensembles ou composants défectueux représentés dans un ou plusieurs plans graphiques d'un affichage (Display) par rapport à des points de mesure (a, b, c, d, e, f).

29. Dispositif selon l'une quelconque des revendications précédentes, **caractérisé en ce qu'**un guidage ou une information d'un utilisateur en des points de mesure (a, b, c, d, e, f) peut être effectué de façon acoustique en supplément, en particulier sous la forme de commentaires vocaux, qui sont restitués au moyen de casques d'écoute et qui se rapportent à une information visualisée simultanément.

30. Procédé pour l'utilisation de signaux de vibration et/ou de signaux de bruit structurel d'un système technique, un dispositif portable de collecte de mesure (20) étant relié à un point de mesure (a, b, c, d, e, f) d'un objet à mesurer (11, 12, 13, 14) et au moins une tâche de mesure étant traitée au point de mesure, et un résultat de mesure obtenu étant acquis, le au moins objet à mesurer (11, 12, 13, 14) étant représenté sur un dispositif d'affichage (23) de l'appareil de collecte de mesure (20), les points de mesure (a, b, c, d, e, f) de l'objet à mesurer (11, 12, 13, 14) étant représentés également et un opérateur sélectionnant un point de mesure quelconque ou un point de mesure prédéfini des points de mesure (a, b, c, d, e, f) représentés et la au moins une tâche de mesure étant traitée pour le point de mesure (f) sélectionné,
**caractérisé en ce que**
le au moins un objet à mesurer (11, 12, 13, 14) est représenté en image graphiquement sur un dispositif d'affichage (23) de l'appareil de collecte de données (20).
